# EUROPEAN PATENT APPLICATION

(11) **EP 3 543 690 A1**
(43) Date of publication of application: **25.09.2019**
(21) Application number: 17870947.3
(22) Date of filing: 15.11.2017
(51) Int. Cl.: G01N 30/88, G01N 30/02, G01N 30/44, G01N 30/46

(54) **MULTIDIMENSIONAL CHROMATOGRAPHIC ANALYSIS METHOD AND ANALYSIS SYSTEM**

(30) Priority: 15.11.2016 JP 2016222807
(71) Applicant: Shiseido Company, Ltd., Tokyo 104-0061 (JP)
(72) Inventor: HAMASE, Kenji, Fukuoka-shi Fukuoka 812-8581 (JP); KOGA, Reiko, Fukuoka-shi Fukuoka 812-8581 (JP); MITA, Masashi, Tokyo 104-0061 (JP)
(74) Representative: Scholz, Volker
(86) International application number: PCT/JP2017/041149
(87) International publication number: WO 2018/092818

(57) **Abstract**

The objective of the present invention is to provide a more accurate method and system for analyzing a sample containing an optical isomer. This method is characterized in that, with reference to results of chromatography, fractions for which complete separation from one or a plurality of chromatograph peaks corresponding to one or a plurality of other components has been achieved, from the time at which the peak starts to rise from the baseline until the peak has completely returned to the baseline, are successively fractionated separately, and if complete separation cannot be achieved for a single component, the fractionated fraction is subjected to additional chromatography, and if complete separation is achieved, the fractionated fraction is subjected to chiral chromatography.

## Description

### FIELD

The present invention relates to an analysis method for optical isomers of multiple components in a sample by chromatography, and to an analysis system for carrying out the analysis method.

### BACKGROUND

Chromatography is a technology to separate and detect multiple components, by using a mobile phase that is introduced into an analysis system and a stationary phase retained in a column or the like, introducing a sample containing multiple components into the analysis system together with the mobile phase, and using differences in physical or chemical interaction between the stationary phase and each of the components in the mobile phase.

However, when it is attempted to analyze multiple components with similar physical and chemical properties, their interaction with the stationary phase results in elution without adequate separation, and consequent overlapping of their chromatographic peaks. It has therefore been impossible in some cases to precisely separate multiple components in a sample using a single separation system.

Analysis methods are therefore widely employed wherein the components separated and fractionated by chromatography are separated by further chromatography comprising a different mobile phase and stationary phase. Such methods are known as "two-dimensional chromatographic analysis methods".

In two-dimensional chromatographic analysis methods, generally a chromatographic peak fraction, including a target component separated by first-dimensional chromatography, is separated off and introduced for second-dimensional chromatography to precisely separate off the target component. Such methods may employ a method of switching columns within a series of devices (online column switching) or a method of introducing a fraction that has already been separated out of the analysis system, into a different system (offline column switching).

Since such methods only allow separation of a single target component per analysis series, when multiple components are to be separated, the number of analysis series and frequency of analysis must be increased in proportion to their number, and this has required more effort and time with larger numbers of target components. When only a limited amount of sample is available, such as in the case of a biological sample, the analysis frequency is also restricted, and it has often been impossible to analyze all of the target components.

As a way of solving this problem, a method and system for two-dimensional liquid chromatography wherein two columns are combined with a multi loop that separately holds the separated fractions, to allow automatic, simultaneous analysis of multiple components all at once has been developed (PTL1). In addition, a liquid chromatography system in which components that have been fractionated during the time after initial rise from the baseline of the peak for each component separated by first-dimensional chromatography, until full return to the baseline, are successively separated off into a retainer, and the completely separated components are then supplied to second-dimensional chromatography analysis has been developed (PTL2).

PTLs 1 and 2 are designed so that optical isomers that are difficult to separate by one-dimensional chromatography are separated by subsequent second-dimensional chromatography. While PTL 2 discloses successive separation into a retainer of components fractionated during the period after initial rise from the baseline of the peak for each component until full return to the baseline, the method assumes that each of the components to be analyzed do not have peaks mutually overlapping with components other than their optical isomers.

### [CITATION LIST]

### [PATENT LITERATURE]

[PTL 1] Japanese Patent Publication No. 4291628
[PTL 2] Japanese Patent Publication No. 4980740
[PTL 3] Japanese Unexamined Patent Publication No. 2015-48332

### SUMMARY

### [TECHNICAL PROBLEM]

Conventional two-dimensional chromatography has allowed separation and quantitation of optical isomers of multiple components. However, the present inventors have found that when a complex matrix component is abundantly present and one of its optical isomers significantly differs in its abundance compared to other optical isomers, such as in the case of amino acids in biological samples, overlapping of chromatographic peaks which is resulted from slight variations in their retention times due to differences in conditions such as temperature may cause fluctuations in the measured values for the relatively scarce optical isomer(s).

### [SOLUTION TO PROBLEM]

In the course of examining the cause of this in order to solve the problem, the present inventors found that slight overlapping of peaks separated by first-dimensional chromatography greatly affects the separation results in second-dimensional chiral chromatography. As a result of further study of chromatography systems, the present inventors succeeded in devising a system in which the point of initial rise from baseline and the point of full return to baseline are strictly assessed for a chromatogram obtained from one-dimensional chromatography, and when multiple peaks are included at the point of initial rise from baseline and the point of full return to baseline, i.e. when peak overlapping is observed, the fraction containing the multiple components is supplied to subsequent chromatography and repeatedly subjected to chromatographic analysis until the single component is completely separated. By thus supplying a fraction corresponding to the target separated peak to chromatographic analysis (chiral chromatography analysis) designed for successive separation of optical isomers, it has become possible to precisely measure even trace optical isomers in a complex matrix such as a biological sample, and the present invention has thus been devised.

The present invention thus relates to the following:
[1] A method of analyzing optical isomers of multiple components in a sample by chromatography, the method including:
   (i) a step of separating and detecting a sample containing multiple components by chromatography using a column and a mobile phase, to obtain a chromatogram,
   (ii) a step of determining the point of initial rise from baseline and the point of full return to baseline for one or more chromatographic peaks,
   (iii) a step of separately and successively separating off each fraction corresponding to the point of initial rise from baseline until the point of full return to baseline,
   (iv) a step of proceeding to the next step if the peak from the point of initial rise from baseline until the point of full return to baseline consists of a single peak, or repeating step (i) to step (iv) if the fraction corresponding to the point of initial rise from baseline until the point of full return to baseline includes multiple peaks, and
   (v) a step of separating and detecting, by chiral column chromatography, each optical isomer in the fractions in which the peak from the point of initial rise from baseline until the point of full return to baseline corresponds to a single peak, to obtain a chromatogram,
   wherein when step (i) to step (iv) are repeated, the chromatography is carried out using a column and a mobile phase that are different from the previously used column and mobile phase.
[2] The analysis method according to [1], wherein the point of initial rise from baseline and the point of full return to baseline is the point at which complete separation takes place between one or more peaks from the point of initial rise from baseline until the point of full return to baseline, and the other peaks.
[3] The analysis method according to [2], wherein complete separation is assessed based on the standard of a degree of separation of 1.5 or greater.
[4] The analysis method according to any one of [1] to [3], wherein the chromatography is high-performance liquid chromatography.
[5] The analysis method according to any one of [1] to [4], wherein the point of initial rise from baseline and the point of full return to baseline is determined for the chromatographic peak previously obtained for a standard sample, and the fraction is obtained for that initial point and full return point.
[6] The analysis method according to any one of [1] to [5], wherein the column is selected from the group consisting of a reversed-phase column, normal-phase column, cation exchange column, anion exchange column, chiral column and their mixed-mode columns.
[7] The analysis method according to any one of [1] to [6], wherein the analysis method further includes the following step:
   (vi) a step of quantifying each optical isomer of each component from the chromatogram for each optical isomer.
[8] The analysis method according to any one of [1] to [7], wherein the sample is a biological sample.
[9] The analysis method according to any one of [1] to [8], wherein the components to be analyzed are a protein-forming amino acid and its optical isomer.
[10] A system for analyzing multiple components, comprising one or more chromatography units each comprising a column, a mobile phase introducer and a detector, a chiral chromatography unit comprising a chiral column, a mobile phase introducer and a detector, a flow channel, a flow channel switching unit, one or more reservoirs, and a controller, wherein:
   (i) the controller drives the chromatography units so as to separate and detect multiple components in a sample to obtain a chromatogram;
   (ii) the controller determines the point of initial rise from baseline and the point of full return to baseline for the chromatographic peaks corresponding to the one or more components in the chromatogram;
   (iii) the controller drives the flow channel switching unit so as to successively introduce the fraction corresponding to the point of initial rise from baseline until the point of full return to baseline, into the one or more reservoirs;
   (iv) if the peak from the point of initial rise from baseline until the point of full return to baseline consists of a single peak, the process continues to the next step, or if the peak from the point of initial rise from baseline until the point of full return to baseline includes multiple peaks, the controller drives the flow channel switching unit, for introduction from one reservoir to a different chromatography unit than the previously used chromatography unit, and steps (i) to (iv) are repeated;
   (v) the controller drives the flow channel switching unit so as to introduce the fraction corresponding to a single peak from the point of initial rise from baseline until the point of full return to baseline, into the chiral chromatography unit; and;
   (vi) the controller drives the chiral chromatography unit so as to separate and detect an optical isomer in the fraction in which complete separation of a single component has been achieved, and obtain a chromatogram.
[11] The analysis system according to [10], wherein the point of initial rise from baseline and the point of full return to baseline is the point at which complete separation takes place between one or more peaks from the point of initial rise from baseline until the point of full return to baseline, and the other peaks.
[12] The system according to [11], wherein complete separation is assessed based on the standard of a degree of separation of 1.5 or greater.
[13] The analysis method according to any one of [10] to [12], wherein the point of initial rise from baseline and the point of full return to baseline is determined for the chromatographic peak previously obtained for a standard sample, and the fraction is obtained for that initial point and full return point.
[14] The system according to any one of [10] to [13], wherein in step (ii), the controller drives the flow channel switching unit to introduce the fraction corresponding to the peak from the point of initial rise from baseline until the point of full return to baseline, to a different chromatography unit in step (iii), instead of into a loop of a multi loop.
[15] The system according to any one of [10] to [14], wherein the reservoir is a loop.
[16] The system according to any one of [10] to [15], wherein the chromatography unit different from the previously used chromatography unit has the same column as the column of the previously used chromatography unit, but has a different mobile phase from the mobile phase of the previously used chromatography unit.
[17] The system according to any one of [10] to [16], wherein the chromatography is high-performance liquid chromatography.
[18] The system according to any one of [10] to [17], wherein the column is selected from the group consisting of a reversed-phase column, normal-phase column, cation exchange column, anion exchange column, chiral column and their mixed-mode columns.
[19] The system according to any one of [10] to [18], wherein (viii) the controller quantifies each optical isomer from the chromatogram for each optical isomer.
[20] The system according to any one of [10] to [19], wherein the sample is a biological sample.
[21] The system according to any one of [10] to [20], wherein the components to be analyzed are a protein-forming amino acid and its optical isomer.

### [ADVANTAGEOUS EFFECTS OF INVENTION]

According to the invention it is possible to precisely separate and quantify optical isomers of target components in a sample.

### BRIEF DESCRIPTION OF DRAWINGS

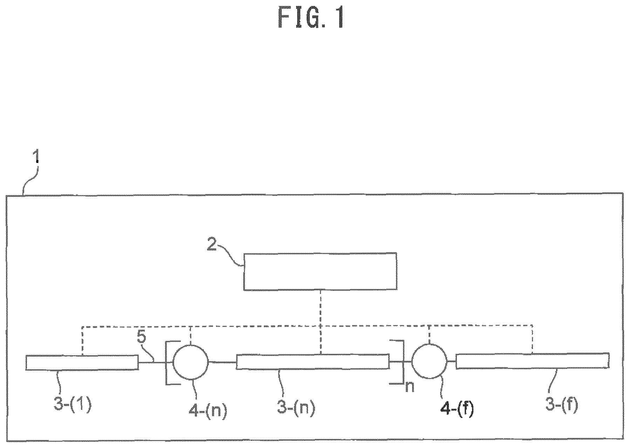

Fig. 1 shows an example of a block diagram of an analysis system for the chromatography analysis method of the invention.

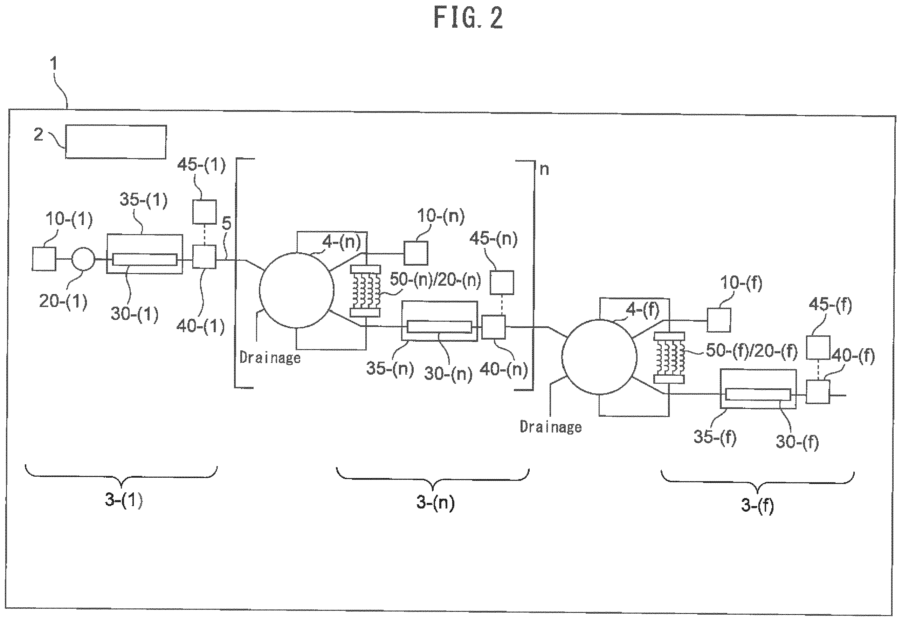

Fig. 2 shows an example of a constitution diagram of an analysis system for the chromatography analysis method of the invention.
Fig. 3 is an example of a constitution diagram showing the mobile phase introducer 10 in detail.
Fig. 4 is an example of a constitution diagram showing a flow channel switching unit 4, and a reservoir 50/multi loop unit 55, in further detail.
Fig. 5 shows a chromatogram obtained by a chromatography analysis method carried out according to the invention. Three-dimensional chromatography was carried out.
Fig. 5A shows the first-dimensional chromatogram. Complete separation of glutamine and serine as single components could not be achieved in the one-dimensional chromatography. Fig. 5B shows the second-dimensional chromatogram. In the second-dimensional chromatography, complete separation of the peaks was achieved. Fig. 5C shows chromatograms obtained by supplying the separated fractions, for which complete separation had been achieved, to chiral chromatography.
Fig. 6 shows a chromatogram obtained by a conventional two-dimensional chromatographic analysis method. Fig. 6A shows the one-dimensional chromatogram. In the first-dimensional chromatography, complete separation of glutamine and serine as single components could not be achieved, but the fraction was separated off with a separation time estimated based on a Gaussian distribution. Fig. 6B shows chromatograms obtained by supplying the separated fractions to chiral chromatography.

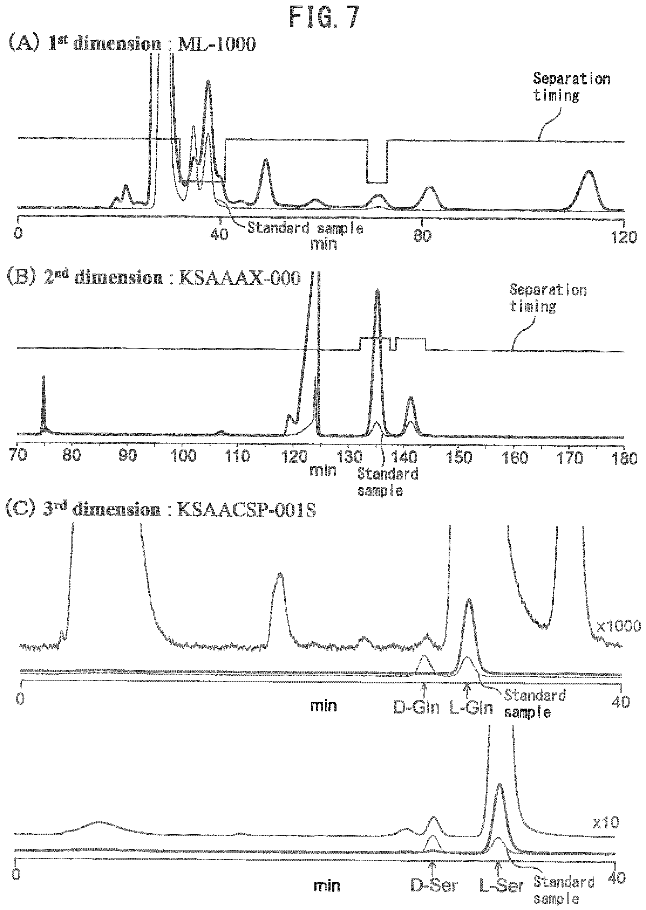

Fig. 7 shows a chromatogram obtained by a chromatography analysis method carried out according to the invention. Three-dimensional chromatography was carried out. Fig. 7A shows the first-dimensional chromatogram. Complete separation of glutamine and serine as single components could not be achieved in the first-dimensional chromatography. Fig. 7B shows the second-dimensional chromatogram. In the second-dimensional chromatography, complete separation of the peaks was achieved. Fig. 7C shows chromatograms obtained by supplying the separated fractions, for which complete separation had been achieved, to chiral chromatography.
Fig. 8 shows a chromatogram obtained by a conventional two-dimensional chromatographic analysis method. (A) In the first-dimensional chromatography, complete separation of the peaks for glutamine and serine could not be achieved, but the fraction was separated off with a separation time estimated based on a Gaussian distribution. (B) shows chromatograms obtained by supplying the separated fractions to chiral chromatography.
Fig. 9 shows a chromatogram obtained by conventional two-dimensional chromatographic analysis with human urine as the sample. Chromatograms for asparagine (A), serine (B), alanine (C) and proline (D) are shown.
Fig. 10 shows a chromatogram obtained by three-dimensional chromatographic analysis with human urine as the sample, for separation of asparagine, serine, alanine and proline. Fig. 10A is a first-dimensional chromatogram, Fig. 10B is a second-dimensional chromatogram, and Fig. 10C is a three-dimensional chromatogram.
Fig. 11 shows a chromatogram obtained by two-dimensional chromatographic analysis with mouse urine as the sample. Fig. 11A is a first-dimensional chromatogram, and Fig. 11B is a second-dimensional chromatogram.
Fig. 12 shows a chromatogram obtained by three-dimensional chromatographic analysis with mouse urine as the sample. Fig. 12A is a first-dimensional chromatogram, Fig. 12B is a second-dimensional chromatogram, and Fig. 12C is a three-dimensional chromatogram.
Fig. 13 shows a chromatogram obtained by three-dimensional chromatographic analysis with rat urine as the sample. Fig. 13A is a first-dimensional chromatogram, Fig. 13B is a second-dimensional chromatogram, and Fig. 13C is a three-dimensional chromatogram.
Fig. 14 shows a chromatogram obtained by three-dimensional chromatographic analysis with human urine as the sample. Fig. 14A is a first-dimensional chromatogram, Fig. 14B is a second-dimensional chromatogram, and Fig. 14C is a three-dimensional chromatogram.

### DESCRIPTION OF EMBODIMENTS

The present invention relates to an analysis method for optical isomers of multiple components in a sample by chromatography. More specifically, the present invention includes the following steps:
(i) a step of separating and detecting a sample containing multiple components by chromatography using a column and a mobile phase, to obtain a chromatogram,
(ii) a step of determining the point of initial rise from baseline and the point of full return to baseline for the one or more chromatographic peaks to be analyzed, excluding the matrix components,
(iii) a step of separately and successively separating off the fraction corresponding to the point of initial rise from baseline until the point of full return to baseline, excluding the matrix components,
(iv) a step of proceeding to the step of optical isomer separation if the peak from the point of initial rise from baseline until the point of full return to baseline consists of a single peak, or repeating step (i) to step (iv) if the fraction corresponding to the point of initial rise from baseline until the point of full return to baseline includes multiple peaks, and
(v) a step of separating and detecting, by chiral chromatography, each optical isomer in the fraction corresponding to a single peak from the point of initial rise from baseline until the point of full return to baseline, excluding the matrix components, to obtain a chromatogram. When step (i) and step (ii) are repeated, preferably the chromatography is carried out using a combination of a column and/or mobile phase that differs from the previously used column and/or mobile phase combination.

According to another aspect, the present invention relates to a system for analysis of multiple components, comprising one or more chromatography units each comprising a column, a mobile phase introducer and a detector, a chiral chromatography unit comprising a chiral column, a mobile phase tank, a pump and a detector, a flow channel, a flow channel switching unit, one or more reservoirs, and a controller. The system of the invention carries out the following steps:
(i) the controller drives the chromatography units so as to separate and detect multiple components in a sample to obtain a chromatogram;
(ii) the controller determines the point of initial rise from baseline and the point of full return to baseline for one or more chromatographic peaks in the chromatogram;
(iii) the controller drives the flow channel switching unit so as to successively introduce the fraction corresponding to the point of initial rise from baseline until the point of full return to baseline, into the one or more reservoirs;
(iv) if the peak from the point of initial rise from baseline until the point of full return to baseline consists of a single peak, the process continues to the next step, or if the peak from the point of initial rise from baseline until the point of full return to baseline includes multiple peaks, the controller drives the flow channel switching unit so as to introduce the fraction corresponding to the peaks from the point of initial rise from baseline until the point of full return to baseline, from the reservoir containing the fraction to a different chromatography unit than the previously used chromatography unit, and steps (i) to (iv) are repeated;
(v) the controller drives the flow channel switching unit so as to introduce the fraction corresponding to a single peak from the point of initial rise from baseline until the point of full return to baseline, from the reservoir into the chiral chromatography unit; and;
(vi) the controller drives the chiral chromatography unit so as to separate and detect an optical isomer in the fraction containing a single component, and obtain a chromatogram.

The chromatography of the invention may employ any chromatography such as liquid chromatography or gas chromatography. Liquid chromatography uses a liquid as the mobile phase introduced into an analysis system and a column or the like as a stationary phase, with a sample containing multiple components being introduced into the analysis system, and the difference in physical or chemical interaction between the stationary phase and each of the components in the mobile phase being utilized to separate and detect the components.

The chromatographic analysis method of the invention is used to carry out multidimensional chromatography. An overview of N-dimensional chromatography will now be described. (Here, N is an integer of 2 or greater, and three-dimensional, 4-dimensional, 5-dimensional or higher dimensional chromatography may be implemented.) The system 1 for N-dimensional chromatographic analysis will now be described with reference to the attached drawings. The system 1 of the invention includes a controller 2, a chromatography unit 3, a flow channel switching unit 4 and a flow channel 5, the controller 2 controlling the chromatography unit 3 and the flow channel switching unit 4. The chromatography unit 3 and the flow channel switching unit 4 are connected via the flow channel 5. The sample introduced into the first chromatography unit 3-(1) is repeatedly introduced n times at a repeat chromatography unit 3-(n) (n representing an integer of 0 or greater), and is analyzed by being introduced into a final chiral chromatography unit 3-(f). The number of repeats n at this stage is represented as (N-2). The process is repeated after each chromatographic analysis, until complete separation of a single component containing only an optical isomer is achieved. When complete separation of the single component containing only an optical isomer has been achieved, it is supplied to the final chiral chromatography unit 3-(f) without further repetition. The chromatography unit used is preferably a different chromatography unit, in terms of the previously used column 30 and/or mobile phase. A chromatography unit that is different from the previously used chromatography unit means that the chromatography used is a combination of a column and mobile phase that are different from the previously used combination of a column and mobile phase. Therefore, the chromatography unit used may have the same column but with a different mobile phase. In this case, the method is carried out using the previously used column, with only a different mobile phase. The chromatography unit 3 will usually include a mobile phase introducer 10, a sample introducer 20, a column 30 and a detector 40. A chromatogram is drawn from the values measured by the detector of the liquid chromatography analysis unit, and it may be recorded in a recorder 45. A column temperature regulator 35 is mounted in the column 30. A mobile phase tank 11 and pump 12 are connected to the mobile phase introducer 10, and the mobile phase is introduced into it. The mobile phase that is introduced may be a combination of two or more solvents, in which case a mobile phase mixing unit 13 may be used for periodic variation of the concentration gradient, and the mobile phase may be conveyed and mixed with a plurality of pumps. Since gas included in the mobile phase drawn up by the pump 12 can affect interaction with the stationary phase and act as a source of noise, a degasser 14 may also be installed. The mobile phase introduced from the mobile phase introducer 10 is fed to the column 30 through the sample introducer 20. The sample can be injected in from the sample introducer 20. The sample may be pretreated, or it may be used directly. In the chromatography after the second-dimensional chromatography, the sample that has been temporarily stored in the reservoir 50 is introduced from the reservoir 50 instead of from the sample introducer 20. Each of the components in the sample is separated by a combination of the stationary phase of the column and the introduced mobile phase, and the eluted components are detected by a detector, in order from the smaller retained components. The signals for the components of the sample detected by the detector are sent to a recorder where they are recorded, and a chromatogram can be obtained for the amount of components in the sample, detected with respect to the retention time.

In the chromatographic analysis method of the invention, separation and analysis are repeated using a chromatography unit 3 that differs from the previously used column 30 and mobile phase, until complete separation of the components including only the target optical isomers, excluding the matrix components. Therefore, repeat chromatography units 3-(n) are provided in addition to the first chromatography unit 3-(1), in the number required for the number of times to be repeated. Then, it is connected to the final chiral chromatography unit 3-(f). The components that have passed through the chromatography column and become separated have their flow channel switched by a flow channel switching unit 4-(n), for temporary storage in a reservoir 50-(n). The reservoir 50-(n) is, for example, a multi loop unit 55 composed of a plurality of loops 56.

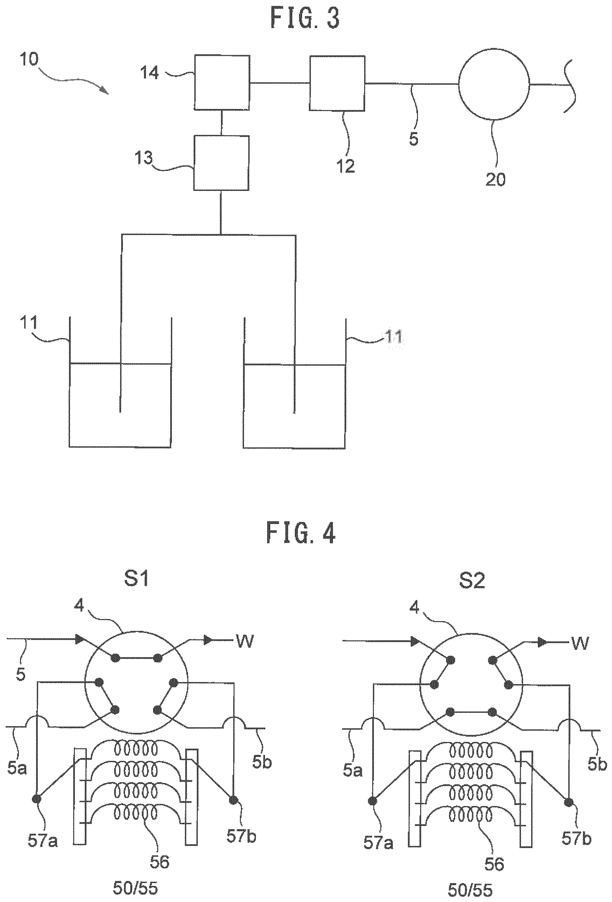

The flow channel switching unit 4 is realized by controlling a 6-way switching valve as shown in Fig. 4, for example. As an example, eluate from the column is connected to a drain tank by switching position S1, and is switched to switching position S2 when the detector 45 detects the fraction that is to be separated. In switching position S2, the eluate from the column is connected to the reservoir 50/multi loop unit 55, and the storage destination is determined by switching means 57a and 57b of the reservoir 50/multi loop unit 55.

The multi loop unit 55 has a plurality of loops 56, and switching means 57a and 57b that connects one of the loops selected from the plurality of loops 56 to flow channels 5a and 5b. By using such a multi loop unit 55, each of the components of the sample that have been separated at the column 30 can be held in a separate loop 56. In other words, if the switching position of the flow channel switching unit 4 is switched from S1 to S2 as components of the sample are detected at the detector, and the switching means 57a and 57b are further switched according to the loop 56 to be connected, then each component of the sample can be held in each respective loop 56. After all of the sample components have been separately held in the plurality of loops 56, the switching position of the flow channel switching unit 4 is switched back to S1, while the mobile phase introducer 10 of the next column unit is simultaneously driven so that the loop 56 holding the separated fraction can be introduced to the next chromatography unit.

That is, in the liquid chromatography apparatus of the invention, one or more chromatographic analysis units is used, with injection of a single sample for a first liquid, to completely separate each of the components of the sample that include only optical isomers, while excluding the matrix components, and a final chiral column chromatography analysis unit is used for all of the target components to allow optical resolution to separate and quantify the D-forms and L-forms. By thus using the liquid chromatography apparatus of the invention, it is possible to optically resolve and detect multiple components in a single sample in an online manner after injection of the sample so that, compared to methods in which conventional column-switching chiral HPLC is carried out repeatedly several times offline, the amount of discarded sample is reduced, a smaller amount of sample can be used, and the optical isomers of components in a sample can be rapidly analyzed.

The controller 2 in the system of the invention is able to control both the chromatography unit 3 and the flow channel switching unit 4. More specifically, the controller 2 can drive the chromatography unit 3 by controlling the mobile phase introducer 10, sample introducer 20, column 30, column temperature regulator 35, detector 40 and recorder 45 of the chromatography unit. In addition, the controller 2 can switch the flow channel switching unit 4 based on the chromatogram recorded in the recorder 35. More specifically, the controller 2 determines the point of initial rise from baseline, excluding the matrix components, and the point of full return to baseline, excluding the matrix components, for the chromatographic peaks corresponding to one or more components in the chromatogram. The controller 2 controls the flow channel switching unit 4, allowing the fractions corresponding to the point of initial rise from baseline until the point of full return to baseline to be successively introduced into one or more reservoirs. The controller 2 also assesses whether or not each fraction corresponding to the point of initial rise from baseline until the point of full return to baseline corresponds to a chromatographic peak from a single component including only one optical isomer. This assessment is made by assessing whether the peaks in the chromatogram are single peaks or multiple peaks. When the fraction corresponding to the point of initial rise from baseline until the point of full return to baseline corresponds to a chromatographic peak arising from a single component consisting entirely of one optical isomer, the controller 2 introduces it to the final chiral chromatography unit, and the controller drives the chiral chromatography unit so as to separate and detect the optical isomer of the fraction in which complete separation of a single component has been achieved, and obtain a chromatogram. When the fraction corresponding to the point of initial rise from baseline until the point of full return to baseline is assessed to not be corresponding to a chromatographic peak arising from a single component consisting entirely of an optical isomer (that is, to be corresponding to a chromatographic peak arising from multiple components other than an optical isomer), the controller drives the flow channel switching unit so as to introduce it from one reservoir into a different chromatography unit different from the previously used chromatography unit, and to drive the different chromatography unit. A chromatography unit that is different from the previously used chromatography unit means that the chromatography used is a combination of a column and mobile phase that are different from the previously used combination of a column and mobile phase. Therefore, the chromatography unit used may have the same column but with a different mobile phase. In this case, the system may be constructed such that the previously used column is used while only the mobile phase is different.

The chromatography column used for the invention is not particularly restricted, and a reversed-phase column, normal-phase column, cation exchange column, anion exchange column, chiral column or mixed-mode column of the foregoing, for example, may be used. The packing and mobile phase used in such columns may be selected by a person skilled in the art as appropriate.

A liquid chromatography apparatus of the invention may also be constructed using the following Nanospace Series devices by Shiseido Corp. For example, 3301 can be as the pump 12, ML-1000 (0.53 mm i.d. × 1000 mm) and ML-KSAAAX-00015250-003 (1.5 mm i.d. × 250 mm) as the column 3 and KSAACSP-001S15250-070 (1.5 mm i.d. × 250 mm) as final chiral column 3-(f), and an Autosampler 3033 as the sample injector 20, MPV as the mobile phase mixing unit 13, 3010 as the degasser 14 and 3011 as the column selecting unit 4. The multi loop unit 55 may be constructed, for example, by connecting ten loops 56 with a 0.8 mm inner diameter × 80 cm length (400 µL volume) to an MLV. In addition, 3013 as a fluorescence detector which is the detector 40, and 3750 as a recorder 45.

A system having a three-dimensional chromatographic analysis unit was constructed as an example of a liquid chromatography apparatus according to the invention. By appropriately selecting the parameters such as the mobile phase, column, column temperature and mobile phase flow rate in this system, it is possible to carry out highly precise optical resolution and detection of 20 amino acid optical isomers and/or their derivatives. In the Examples, the optimal conditions for optical resolution of the optical isomers of glutamine (Gln) and serine (Ser) were examined. The optimal conditions for optical resolution of the optical isomers of amino acids in blood plasma samples or urine samples as biological samples were then examined.

For optical resolution, the samples containing the components may be reacted with optical resolution reagents, either beforehand or before analysis by chiral chromatography. The optical resolution reagent used may be a reagent containing a compound such as 2,5-dioxopyrrolidin-1-yl 2-(6-methoxy-4-oxoquinoline-1(4H)-yl)ethyl carbonate. The optical resolution reagent and the method of reaction with the reagent, as well as the separation conditions by the chiral chromatography column, can be used in accordance with the method described in PTL 3 (Japanese Unexamined Patent Publication No. 2015-483332), but this does not mean that these reagents must be used.

In the chromatogram, a single peak per component is obtained if separation of the component has been achieved. The point of initial rise from baseline is the point where a peak group including one or more peaks of a target component, excluding the matrix components, begins to rise from the baseline. Similarly, the point of full return to baseline is the point where peaks that have risen as a peak group including one or more peaks first return to the baseline, excluding the matrix components. Therefore, "from the point of initial rise from baseline until the point of full return to baseline" means that which includes one or more peaks but has no overlapping with peaks of other target components. It therefore means that complete separation has been achieved between the peak group comprising one or more peaks of target components present "from the point of initial rise from baseline until the point of full return to baseline", and peaks of other target components. Consequently, the point of initial rise from baseline and the point of full return to baseline may be considered to be the points at which complete separation takes place between one or more peaks included from the point of initial rise from baseline until the point of full return to baseline, and the other peaks. The fraction corresponding to the point of initial rise from baseline until the point of full return to baseline is the fraction corresponding to one or more peaks included from the point of initial rise from baseline until the point of full return to baseline, but as long as peaks corresponding to other components are not included, a fraction before the point of initial rise from baseline or a fraction after the point of full return to baseline may also be included.

The term "complete separation" means that the peak has "a degree of separation of 1.5 or greater", according to the Japanese Pharmacopoeia. According to the invention, this means preferably 1.2 or greater and more preferably 1.5 or greater. This is the definition used for complete separation according to the invention, for assessing the point of initial rise from baseline and the point of full return to baseline. Therefore, it is not necessarily essential for a single peak to be separated. When complete separation has been achieved between a peak group including one or more overlapping peaks, and the other peaks, the separated sample corresponding to the peak group is supplied to the next chromatographic analysis unit. Column chromatography is repeated until only a single peak is present from the point of initial rise from baseline until the point of full return to baseline, or in other words, until the corresponding fraction consists of only one target component, excluding the matrix components. The chromatography unit 3-1 and repeat chromatography units 3-(n) cannot separate optical isomers, and therefore the obtained single peak includes the optical isomers. Thus, the "single component" referred to according to the invention may include optical isomers. The present invention includes, in the final step (v), a step of separating and detecting each optical isomer by chiral column chromatography, in the fraction in which the peak from the point of initial rise from baseline until the point of full return to baseline corresponds to a single peak, to obtain a chromatogram, and measuring the amount or concentration of the optical isomer of the specified component based on the chromatogram obtained in that step. Thus, as long as there is no effect on quantitation of the amount and concentration of the optical isomer of the specific component, it is acceptable for the "single peak" in the final step (v) to include undesired peaks.

When chromatography of a biological sample is carried out, the chromatogram obtained is in a form that includes the matrix components unique to the type of biological sample, in addition to the chromatographic peaks of the target components. When analyzing a biological sample, therefore, it is sometimes impossible to determine the region from the point of initial rise from baseline to the point of full return to baseline, due to the background attributable to the matrix components. In such cases, the point of initial rise from baseline and the point of full return to baseline for a standard sample containing multiple target components may be determined in advance, and when the biological sample is subjected to chromatography, the fraction for the determined initial point and return point may be obtained. These times may be determined in reference to the point at which the sample is introduced, or the reference components eluting at earlier times may be added to the sample, and the peaks of the reference components used as reference. The standard sample is a sample prepared by addition of a target component. As an example, when optical isomers of 20 different amino acids are to be separately detected, samples having equal amounts of the D-forms and L-forms of the amino acids (excluding glycine) may be used as standard samples.

When using a chromatogram of a standard sample, the step of determining the point of initial rise from baseline and the point of full return to baseline for one or more chromatographic peaks in step (ii) of the analysis method of the invention, is carried out based on the standard sample chromatogram. The fraction is separately and successively separated off in step (iii), at the time corresponding to the region from the point of initial rise from baseline until the point of full return to baseline, as determined by this step.

For at least one repetition, the analysis method of the invention may include the following steps:
(i) a step of separating and detecting a sample containing multiple components by chromatography using a column and a mobile phase, to obtain a chromatogram,
(ii) a step of determining the point of initial rise from baseline and the point of full return to baseline for one or more chromatographic peaks,
(iii) a step of separately and successively separating off the fraction corresponding to the point of initial rise from baseline until the point of full return to baseline,
(iv) a step of separating the fraction corresponding to the point of initial rise from baseline until the point of full return to baseline, by chromatography using a combination of a column and mobile phase that is different from the previously used column and mobile phase combination, to obtain a chromatogram,
(v) a step of determining the point of initial rise from baseline and the point of full return to baseline for one or more chromatographic peaks in the chromatogram of (iv),
(vi) a step of separately and successively separating off the fraction corresponding to the point of initial rise from baseline until the point of full return to baseline,
(vii) a step of proceeding to the next step if the peak from the point of initial rise from baseline until the point of full return to baseline consists of a single peak, or repeating step (iv) to step (vii) if the peak from the point of initial rise from baseline until the point of full return to baseline includes multiple peaks, and
(viii) a step of separating and detecting each optical isomer for the fraction corresponding to a single peak from the point of initial rise from baseline until the point of full return to baseline, by chiral column chromatography, to obtain a chromatogram.

When step (iv) to step (vi) are repeated, preferably the chromatography is carried out using a column and mobile phase that are different from the previously used column and mobile phase.

According to a mode with at least one repetition, the analysis system of the invention comprises a plurality of chromatography units each comprising a column, a mobile phase tank, a pump and a detector, a chiral chromatography unit comprising a chiral column, a mobile phase tank, a pump and a detector, a flow channel, a flow channel switching unit, one or more reservoirs, and a controller, wherein the following are carried out:
(i) the controller drives the chromatography units so as to separate and detect multiple components in a sample to obtain a chromatogram;
(ii) the controller determines the point of initial rise from baseline and the point of full return to baseline for one or more chromatographic peaks in the chromatogram;
(iii) the controller drives the flow channel switching unit so as to successively introduce the fraction corresponding to the point of initial rise from baseline until the point of full return to baseline, into the one or more reservoirs;
(iv) the controller drives the flow channel switching unit for introduction from one reservoir to a chromatography unit different from the previously used chromatography unit;
(v) the controller drives the different chromatography unit to further separate and detect the fraction introduced into the one reservoir and obtain a chromatogram;
(vi) the controller determines the point of initial rise from baseline and the point of full return to baseline for one or more chromatographic peaks in the chromatogram;
(vii) the controller drives the flow channel switching unit to successively introduce the fraction corresponding to the point of initial rise from baseline until the point of full return to baseline, into one or more reservoirs;
(viii) if the peak from the point of initial rise from baseline until the point of full return to baseline consists of a single peak, the process continues to the next step, or if the peak from the point of initial rise from baseline until the point of full return to baseline includes multiple peaks, the controller drives the flow channel switching unit, to introduce the fraction corresponding to the peak from the point of initial rise from baseline until the point of full return to baseline, from the reservoir containing the fraction to a chromatography unit different from the previously used chromatography unit, and steps (v) to (viii) are repeated;
(ix) the controller drives the flow channel switching unit so as to introduce the fraction containing the single component into the chiral chromatography unit; and
(x) the controller drives the chiral chromatography unit so as to separate and detect an optical isomer in the fraction containing the single component, and obtain a chromatogram.

The first-dimensional chromatography may be carried out under the following conditions, as an example:
Column: ML-1000 (0.53 mm i.d. × 1000 mm)
Flow rate: 25 µL/min
Temperature: 45°C
Mobile phase: 5% MeCN, 0.05% TFA aqueous solution

The second-dimensional chromatography may be carried out under the following conditions, as an example:
Column: ML-KSAAAX-00015250-003 (1.5 mm i.d. × 250 mm)
Flow rate: 150 µL/min
Temperature: 10°C
Mobile phase: 0.15% formic acid methanol/acetonitrile (85/15)

The third-dimensional chiral chromatography may be carried out under the following conditions, as an example:
Column: KSAACSP-001S15250-070 (1.5 mm i.d. × 250 mm)
Flow rate: 150 µL/min
Temperature: 25°C
Mobile phase: For glutamine analysis: 0.5% formic acid methanol/acetonitrile (50/50)
For serine analysis: 0.6% formic acid methanol/acetonitrile (40/60)

The analysis method of the invention may also determine the point of initial rise and the point of full return to baseline in a chromatogram obtained in advance by analysis of a standard sample for the target component. According to another mode of the invention, a chromatogram may be produced in real time, determining the point of initial rise and point of full return to baseline from the chromatogram.

A sample containing multiple components for the invention may be any desired sample, such as a chemical sample or biological sample. The sample is preferably a biological sample, examples of which include body fluids such as blood, blood plasma, serum, ascites fluid, amnionic fluid, lymph, saliva, semen and urine, excreta such as feces, sweat and nasal discharge, and body tissues such as body hair, nails, skin tissue or internal organ tissue. A culture medium obtained from cultured cells, or a cell lysate, may also be used as the biological sample. The sample of the invention may also be subjected to appropriate pretreatment depending on the type of sample or the component to be separated, for the purpose of removing the insoluble fraction or improving the separative power. Such pretreatment may be selected as desired by a person skilled in the art. When the sample is blood, as an example, the pretreatment may include the following steps:
a step of separating the blood plasma and serum;
a step of removing the proteins; and
a step of fluorescent derivatization.

According to the invention, the component to be analyzed may be any desired component that has optical isomers, which includes bodily metabolites such as amino acids, lactic acid or malic acid. According to one embodiment, it is an amino acid, and particularly a protein-forming amino acid. Examples of amino acids other than protein-forming amino acids include citrulline, ornithine, kynurenine, hydroxyproline and DOPA. Twenty protein-forming amino acids are known, and all except for glycine have optical isomers (L-amino acid and D-amino acids). Of those optical isomers, primarily L-amino acids are present in living bodies, but in recent years it has been found that small amounts of D-amino acids also have biological functions, for which reason it is desirable to precisely measure amounts of D-amino acids. It has been demonstrated that D-amino acids have known and unknown effects, and can function as disease markers in living bodies (WO2013/140785). In organisms, such D-amino acids are usually present in extremely trace amounts compared to L-amino acids. The present invention allows precise quantitative analysis of these, and is therefore highly useful for analysis and diagnosis of physiological functions.

All of the publications mentioned throughout the present specification are incorporated herein in their entirety by reference. The examples of the invention described below are intended to serve merely as illustration and do not limit the technical scope of the invention. The technical scope of the invention is limited solely by the description in the Claims. Modifications of the invention, such as additions, deletions or substitutions to the constituent features of the invention, are possible so long as the gist of the invention is maintained.

### EXAMPLES

### Example 1

For this example, a mixed aqueous solution containing serine and glutamine with a ratio of D:L = 1:1 was used, as a sample to confirm the precision of the analysis method and system of the invention.

As pretreatment, the sample was subjected to fluorescent derivatization treatment by NBD-F.

The pretreated sample was subjected to chromatography under the following conditions.

First-dimensional chromatography was carried out under the following conditions, for example.

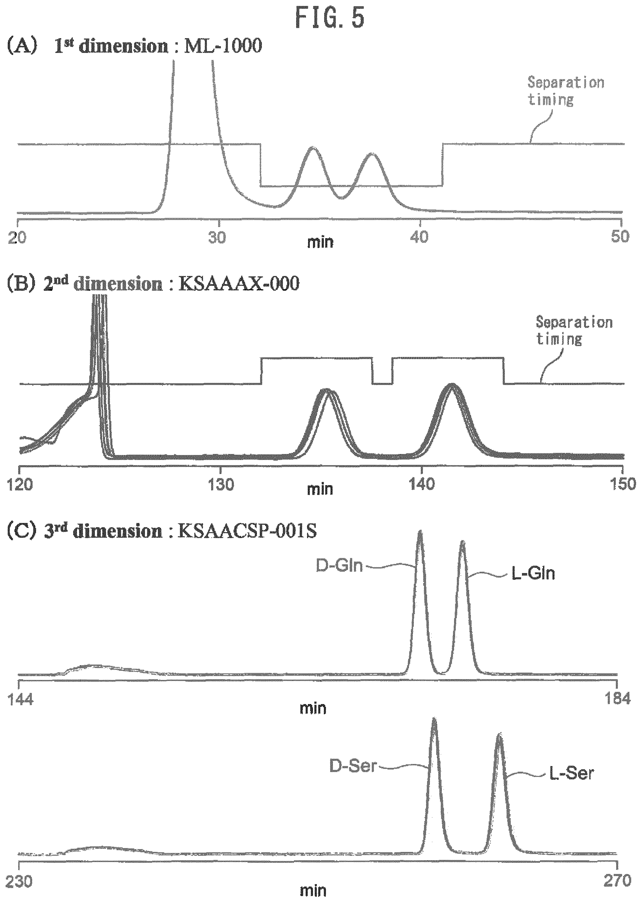

Column: ML-1000 (0.53 mm i.d. × 1000 mm)
Flow rate: 25 µL/min
Temperature: 45°C
Mobile phase: 5% MeCN, 0.05% TFA aqueous solution
The obtained chromatogram is shown in Fig. 5A.

In the chromatogram obtained from the first-dimensional chromatography, the peaks for D,L-serine and D,L-glutamine were overlapping. The degree of separation was less than 1. The sample corresponding to the region from the point of initial rise from baseline until the point of full return to baseline of the peak group that included the D,L-serine peak and D,L-glutamine peak was separated off.

The separated sample was supplied to second-dimensional chromatography. The second-dimensional chromatography was carried out under the following conditions:
Column: ML-KSAAAX-00015250-003 (1.5 mm i.d. × 250 mm)
Flow rate: 150 µL/min
Temperature: 10°C
Mobile phase: 0.15% formic acid methanol/acetonitrile (85/15)
The obtained chromatogram is shown in Fig. 5B.

In the chromatogram obtained from the first-dimensional chromatography, the peaks for D,L-serine and D,L-glutamine were separated. The degree of separation was 1.5, and therefore complete separation had been achieved. The samples corresponding to the respective regions from the point of initial rise from baseline until the point of full return to baseline of each of the D,L-serine peak and D,L-glutamine peak were separated off.

Third-dimensional chiral chromatography was carried out under the following conditions, for example:
Column: KSAACSP-001S15250-070 (1.5 mm i.d. × 250 mm)
Flow rate: 150 µL/min
Temperature: 25°C
Mobile phase: For glutamine analysis: 0.5% formic acid methanol/acetonitrile (50/50)
For serine analysis: 0.6% formic acid methanol/acetonitrile (40/60)
The obtained chromatogram is shown in Fig. 5C.

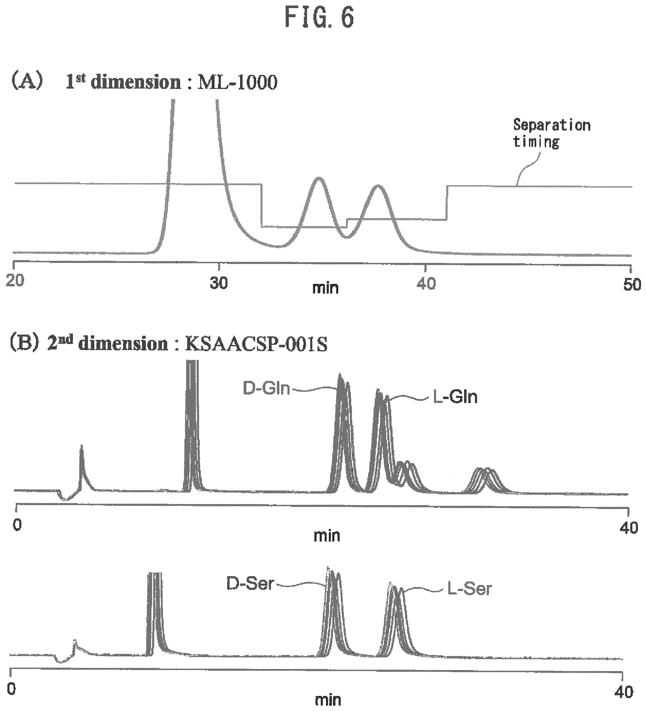

Chromatographic analysis was repeated 5 times for each sample. The chromatograms obtained for each chromatography step are shown in Figs. 6A to 6C.

### Comparative Example 1

As a comparative example, two-dimensional chromatography was carried out using a combination of reversed-phase chromatography and chiral chromatography. The chromatography conditions employed were the following:

First-dimensional chromatography was carried out under the following conditions, for example.

Column: ML-1000 (0.53 mm i.d. × 1000 mm)
Flow rate: 25 µL/min
Temperature: 45°C
Mobile phase: 5% MeCN, 0.05% TFA aqueous solution
The obtained chromatogram is shown in Fig. 6A.

Second-dimensional chiral chromatography was carried out under the following conditions, for example:
Column: KSAACSP-001S15250-070 (1.5 mm i.d. × 250 mm)
Flow rate: 150 µL/min
Temperature: 25°C
Mobile phase: For glutamine analysis: 0.5% formic acid methanol/acetonitrile (50/50)
For serine analysis: 0.6% formic acid methanol/acetonitrile (40/60)
The obtained chromatogram is shown in Fig. 6B.

Chromatographic analysis was repeated 5 times for each sample. The chromatograms obtained for each chromatography step are shown in Fig. 6.

The following table shows the measured values for D-glutamine, L-glutamine, D-serine and L-serine in three-dimensional chromatography and two-dimensional chromatography, for 5 test runs.

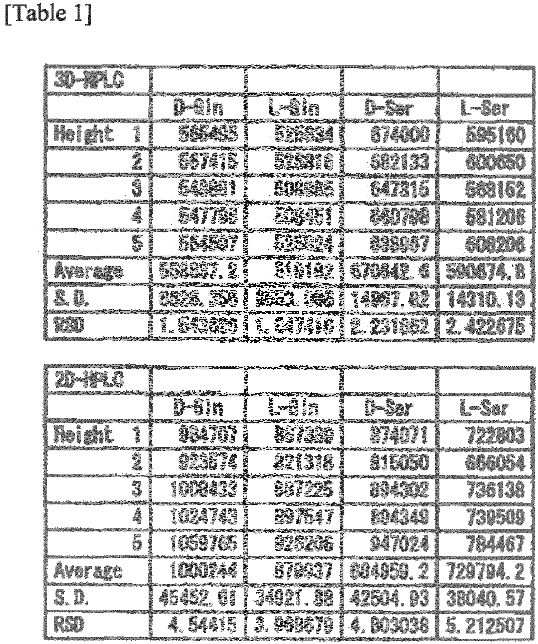

As shown in Fig. 5A and 6A, the peaks for serine and glutamine in the first-dimensional chromatogram were partially overlapping, and complete separation could not be achieved. When such a fraction is separated off and supplied to chiral column chromatography, variation occurs in the peaks between the 5 test runs, as shown in Fig. 6B. Such variation in the peaks is associated with the precision of quantitation, a difference in peak height (sample concentration) being produced even in analysis using the same sample, and the relative standard deviation (RSD) was large (3.9 to 5.2). On the other hand, as shown in Fig. 5B, complete separation was achieved in a chromatogram that was obtained after the fraction for which complete separation could not be achieved was supplied to second-dimensional chromatography with a different column and mobile phase, and when each fraction was supplied to chiral column chromatography, it was possible to minimize the variation in peaks between the 5 test runs, as shown in Fig. 5C. The relative standard deviation (RSD) in the peak heights (sample concentrations) obtained by three-dimensional chromatography was smaller than that obtained by the two-dimensional chromatography (1.5 to 2.4).

### Example 2

In this example, separative analysis was carried out for D-serine/L-serine and D-glutamine/L-glutamine in human blood plasma. As pretreatment, the blood plasma sample was subjected to protein removal and fluorescent derivatization treatment.

First-dimensional chromatography was carried out under the following conditions, for example.

Column: ML-1000 (0.53 mm i.d. × 1000 mm)
Flow rate: 25 µL/min
Temperature: 45°C
Mobile phase: 5% MeCN, 0.05% TFA aqueous solution
The obtained chromatogram is shown in Fig. 7A.

The sample was separated off from the point of initial rise from baseline until the point of full return to baseline of the peak group that included the D,L-serine peak and D,L-glutamine peak, based on the conditions in Example 1.

The separated sample was supplied to second-dimensional chromatography. The second-dimensional chromatography was carried out under the following conditions:
Column: ML-KSAAAX-00015250-003 (1.5 mm i.d. × 250 mm)
Flow rate: 150 µL/min
Temperature: 10°C
Mobile phase: 0.15% formic acid methanol/acetonitrile (85/15)
The obtained chromatogram is shown in Fig. 7B.

In the chromatogram obtained from the second-dimensional chromatography, the peaks for D,L-serine and D,L-glutamine were separated, excluding the matrix components of the blood plasma. The degree of separation was 1.5, and therefore complete separation had been achieved. The samples corresponding to the respective regions from the point of initial rise from baseline until the point of full return to baseline of each of the D,L-serine peak and D,L-glutamine peak were separated off.

The separated sample was supplied to third-dimensional chiral chromatography. The third-dimensional chiral chromatography was carried out under the following conditions:
Column: KSAACSP-001S15250-070 (1.5 mm i.d. × 250 mm)
Flow rate: 150 µL/min
Temperature: 25°C
Mobile phase: For glutamine analysis: 0.5% formic acid methanol/acetonitrile (50/50)
For serine analysis: 0.6% formic acid methanol/acetonitrile (40/60)
The obtained chromatogram is shown in Fig. 7C.

### Comparative Example 2

As a comparative example, two-dimensional chromatography was carried out using a combination of reversed-phase chromatography and chiral chromatography. The chromatography conditions employed were the following:

First-dimensional chromatography was carried out under the following conditions, for example.

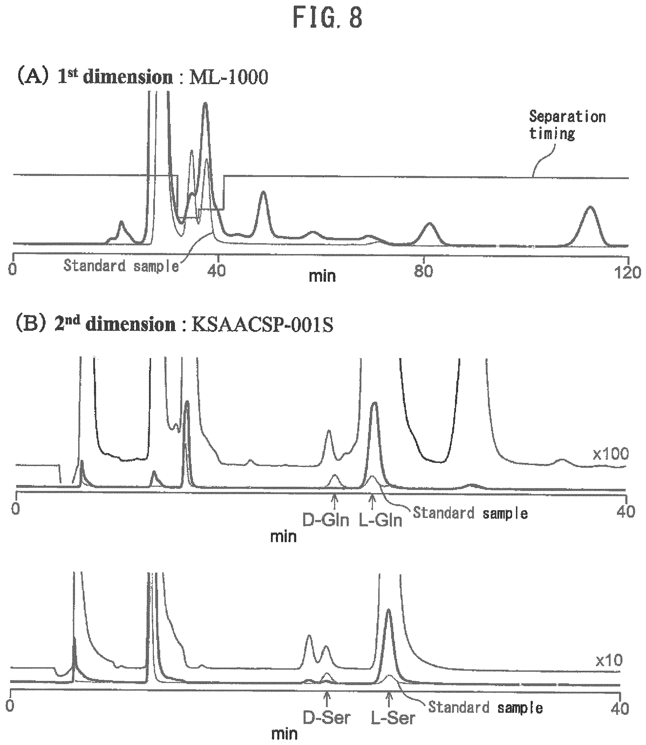

Column: ML-1000 (0.53 mm i.d. × 1000 mm)
Flow rate: 25 µL/min
Temperature: 45°C
Mobile phase: 5% MeCN, 0.05% TFA aqueous solution
The obtained chromatogram is shown in Fig. 8A.

Second-dimensional chiral chromatography was carried out under the following conditions, for example:
Column: KSAACSP-001S15250-070 (1.5 mm i.d. × 250 mm)
Flow rate: 150 µL/min
Temperature: 25°C
Mobile phase: For glutamine analysis: 0.5% formic acid methanol/acetonitrile (50/50)
For serine analysis: 0.6% formic acid methanol/acetonitrile (40/60)
The obtained chromatogram is shown in Fig. 8B. Single peaks were not obtained for the optical isomers of glutamine and serine.

In the chromatogram obtained by two-dimensional chromatography, the peak for the time during which L-glutamine eluted did not appear as a Gaussian distribution for a single component, and therefore the presence of multiple components was inferred. Also, D-glutamine eluted just before the peak for L-glutamine, but separation between D-glutamine and the matrix components was not sufficient and a peak for D-glutamine could not be discriminated (Fig. 8B). In the case of serine, D-serine eluted just before the peak for L-serine with a distinguishable peak, but inseparable peaks assumed to be due to the matrix were present just before the peak for D-serine, thus lowering the quantitation precision for D-serine. Since the abundance of D-amino acids in biological samples is usually extremely low, their complete separation from the more abundant L-form amino acids and matrix components has usually tended to be difficult. In the three-dimensional chromatography, the peaks for the D-amino acids and the peaks for the L-amino acids and matrix components were adequately separated, with low error in the quantitation values.

### Comparative Example 3

As a comparative example, two-dimensional chromatography was carried out using a combination of reversed-phase chromatography and chiral chromatography, with human urine as the sample. As pretreatment, the urine sample was subjected to protein removal and fluorescent derivatization treatment. After adding a 20-fold amount of methanol to the urine sample, 10 µL of supernatant obtained from the methanol homogenate was dried under reduced pressure, 20 µL of 200 mM sodium borate buffer (pH 8.0) and 5 µL of a fluorescence derivatizing reagent (anhydrous MeCN solution containing 40 mM 4-fluoro-7-nitro-2,1,3-benzooxadiazole (NBD-F)) was added and the mixture was heated at 60°C for 2 minutes. A 0.1% TFA aqueous solution (75 µL) was further added, and the mixture was supplied to HPLC.

The chromatography conditions employed were the following:

First-dimensional chromatography separation was carried out under the following conditions:
Column: ML-1000 (0.53 mm i.d. × 1000 mm)
Flow rate: 25 µL/min
Temperature: 45°C
Mobile phase: 5% MeCN, 0.05% TFA aqueous solution

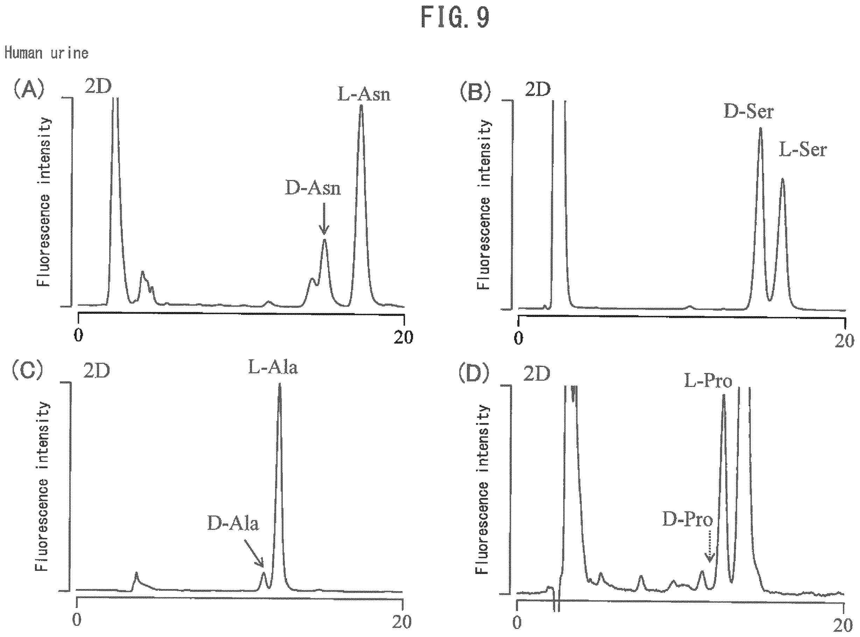

Second-dimensional chiral chromatography separation was carried out under the following conditions:
Column: KSAACSP-001S (1.5 mm i.d. × 250 mm)
Flow rate: 250 µL/min
Temperature: 25°C
Mobile phase: 0.2% formic acid methanol/acetonitrile (90/10)
The obtained chromatogram is shown in Fig. 9.

Fig. 9A is a chromatogram showing separation of the D-form and L-form of asparagine, Fig. 9B is a chromatogram showing separation of the D-form and L-form of serine, Fig. 9C is a chromatogram showing separation of the D-form and L-form of alanine, and Fig. 9D is a chromatogram showing separation of the D-form and L-form of proline. Asparagine and proline were insufficiently separated from contaminants thought to derive from the biological sample.

### Example 3

Human urine was used as the sample for this example.

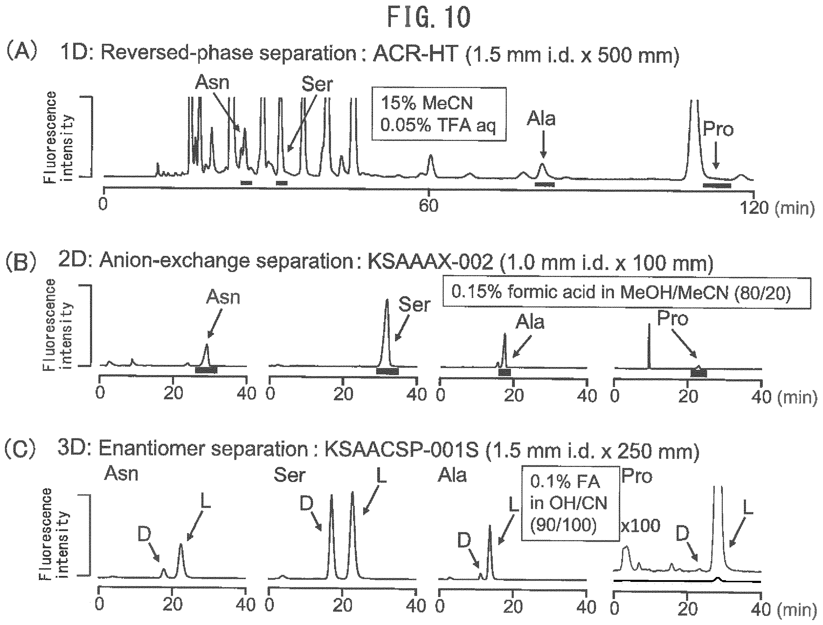

Pretreatment was carried out in the same manner as Comparative Example 3, and the sample was supplied for HPLC. The chromatogram obtained from the first-dimensional chromatography is shown in Fig. 10A, the chromatogram obtained from the second-dimensional chromatography is shown in Fig. 10B, and the chromatogram obtained from the third-dimensional chromatography is shown in Fig. 10C. The abundance of proline was low, and therefore its peaks are displayed at 100x.

First-dimensional chromatography separation was carried out under the following conditions:
Column: ACR-HT (1.5 mm i.d. × 500 mm)
Flow rate: 75 µL/min
Temperature: 45°C
Mobile phase: 15% MeCN, 0.05% TFA aqueous solution
The obtained chromatogram is shown in Fig. 10A.

The fraction containing asparagine, serine, alanine and proline, seen in the chromatogram obtained from the first-dimensional chromatography, was separated off.

The separated sample was supplied to second-dimensional chromatography. The second-dimensional chromatography was carried out under the following conditions:
Column: ML-KSAAAX-002 (1.0 mm i.d. × 150 mm)
Flow rate: 100 µL/min
Temperature: 25°C
Mobile phase: 0.15% formic acid methanol/acetonitrile (80/20)
The obtained chromatogram is shown in Fig. 10B.

The fraction containing asparagine, serine, alanine and proline, seen in the chromatogram obtained from the second-dimensional chromatography, was separated off.

The separated sample was supplied to third-dimensional chromatography. Third-dimensional chiral chromatography was carried out under the following conditions, for example:
Column: KSAACSP-001 S (1.5 mm i.d. × 250 mm)
Flow rate: 150 µL/min
Temperature: 25°C
Mobile phase: 0.1% formic acid methanol/acetonitrile (90/10)
The obtained chromatogram is shown in Fig. 10C.

### Comparative Example 4

For this example, separation and analysis were carried out for the D-form and L-form of citrulline, which is a non-protein-forming amino acid.

A mouse (C57BL) urine sample was harvested and pretreated in the same manner as Comparative Example 3, and the sample was supplied for HPLC. The chromatography conditions employed were the following:

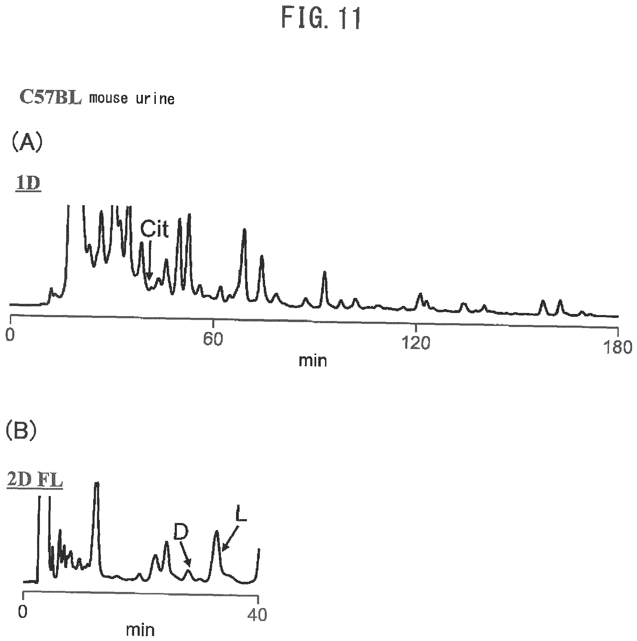

First-dimensional chromatography separation was carried out under the following conditions:
Column: ML-1000 (0.53 mm i.d. × 1000 mm)
Flow rate: 25 µL/min
Temperature: 45°C
Mobile phase: 5%-25% MeCN, 0.05% TFA aqueous solution
The obtained chromatogram is shown in Fig. 11A.

Second-dimensional chiral chromatography separation was carried out under the following conditions:
Column: KSAACSP-105S (1.5 mm i.d. × 250 mm)
Flow rate: 250 µL/min
Temperature: 25°C
Mobile phase: 0.1% formic acid methanol/acetonitrile (90/10)
The obtained chromatogram is shown in Fig. 11B.

Contaminants were present near the peaks for the D-form and L-form of citrulline, and separation was inadequate.

### Example 5

For this example, separation and analysis were carried out for the D-form and L-form of citrulline, which is a non-protein-forming amino acid. A mouse (C57BL) urine sample, a rat (Wistar) urine sample and a human urine sample were each harvested and pretreated in the same manner as Comparative Example 3, and the samples were supplied for HPLC. The chromatography conditions employed were the following:

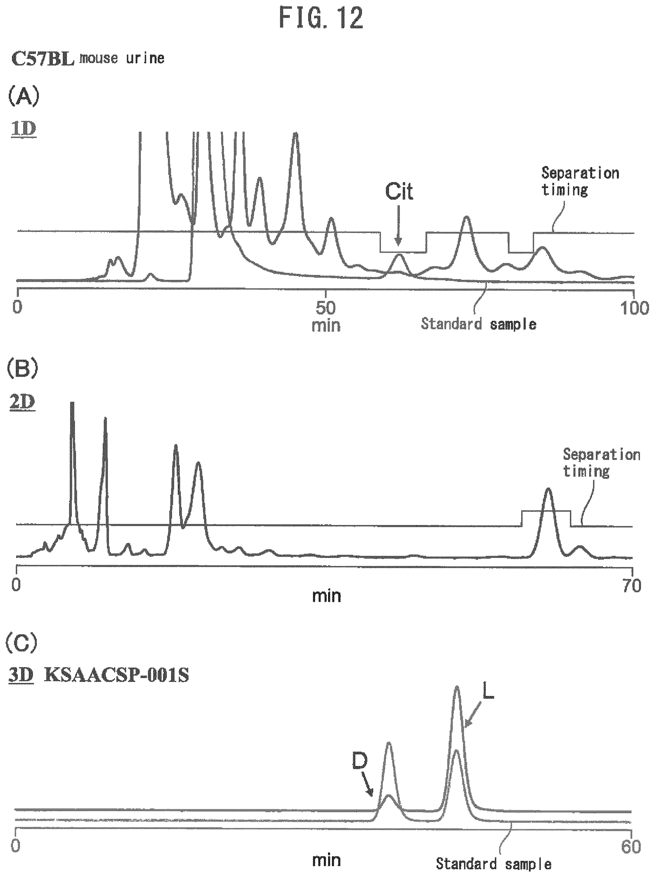

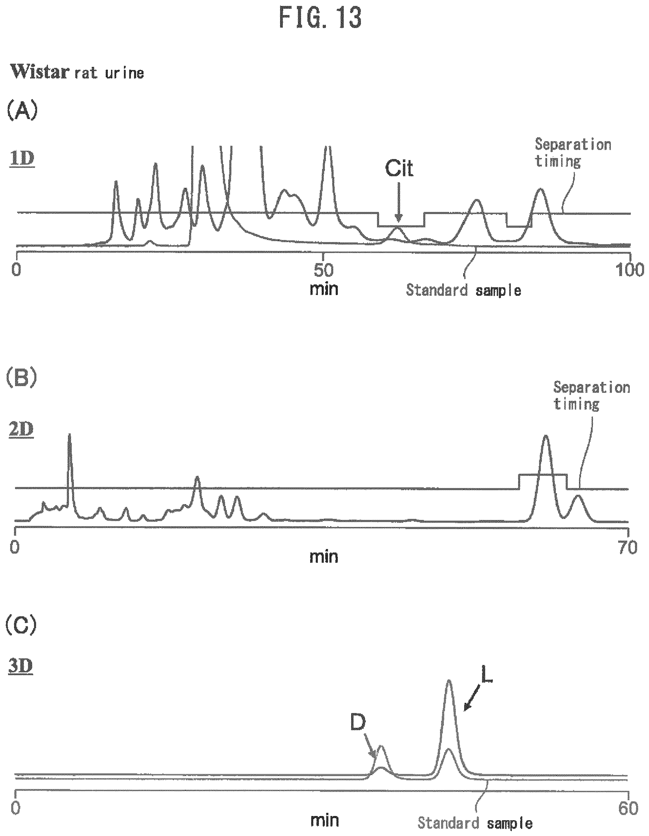

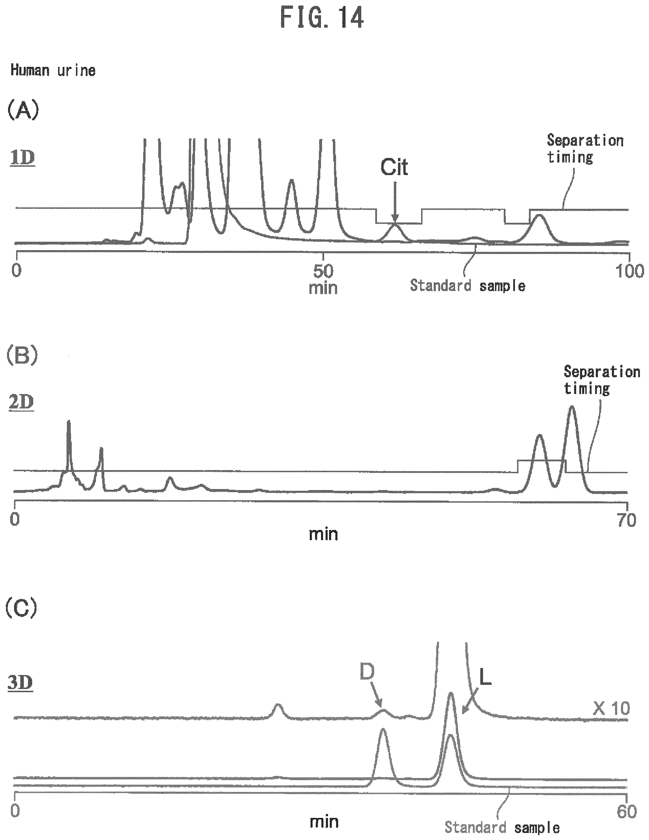

First-dimensional chromatography separation was carried out under the following conditions:
Column: ML-1000 (0.53 mm i.d. × 1000 mm)
Flow rate: 25 µL/min
Temperature: 45°C
Mobile phase: 5% MeCN, 0.05% TFA aqueous solution
The obtained chromatograms are shown in Fig. 12A (mouse), Fig. 13A (rat) and Fig. 14A (human).

The fractions containing citrulline in the chromatograms obtained from the first-dimensional chromatography were separated off.

Each separated sample was supplied to second-dimensional chromatography. The second-dimensional chromatography was carried out under the following conditions:
Column: KSAAAX-000 (1.5 mm i.d. × 250 mm)
Flow rate: 150 µL/min
Temperature: 10°C
Mobile phase: 0.05% formic acid methanol/acetonitrile (90/10)
The obtained chromatograms are shown in Fig. 12B (mouse), Fig. 13B (rat) and Fig. 14B (human).

The fractions containing citrulline in the chromatograms obtained from the second-dimensional chromatography were separated off.

Each separated sample was supplied to third-dimensional chromatography. The third-dimensional chromatography was carried out under the following conditions:
Column: KSAACSP-001S (1.5 mm i.d. × 250 mm)
Flow rate: 200 µL/min
Temperature: 25°C
Mobile phase: 0.1% formic acid methanol/acetonitrile (90/10)
The obtained chromatograms are shown in Fig. 12C (mouse), Fig. 13C (rat) and Fig. 14C (human). With each sample, complete separation of the D-form and L-form of citrulline was achieved, with a degree of separation of 1.5 or greater.

### REFERENCE SIGNS LIST

1 Analysis system
2 Controller
3 Chromatography unit
3-(1) First chromatography unit
3-(n) Repeat chromatography unit
3-(f) Final chiral chromatography unit
4 Flow channel switching unit
4-(n) Repeat flow channel switching unit
4-(f) Final flow channel switching unit
5 Flow channel
5a, b Flow channel
10 Mobile phase introducer
10-(1) First mobile phase introducer
10-(n) Repeat mobile phase introducer
10-(f) Final mobile phase introducer
11 Mobile phase tank
12 Pump
13 Gradient-forming unit
14 Degasser
20 Sample introducer
30 Column
30-(1) First column
30-(n) Repeat column
30-(f) Final chiral column
35 Column temperature regulator
35-(1) First column temperature regulator
35-(n) Repeat column temperature regulator
35-(f) Final chiral column temperature regulator
40 Detector
40-(1) First detector
40-(n) Repeat detector
40-(f) Final detector
45 Recorder
45-(1) First recorder
45-(n) Repeat recorder
45-(f) Final recorder
50 Reservoir
50-(n)/20-(n) Repeat reservoir
50-(f)/20-(f) Final reservoir
55 Multi loop unit
56 Loop
57a, b Switching means
S1 Switching position
S2 Switching position

## Claims

1. A method of analyzing optical isomers of multiple components in a sample by chromatography, the method comprising:
(i) a step of separating and detecting a sample containing multiple components by chromatography using a column and a mobile phase, to obtain a chromatogram,
(ii) a step of determining the point of initial rise from baseline and the point of full return to baseline for one or more chromatographic peaks,
(iii) a step of separately and successively separating off the fraction corresponding to the point of initial rise from baseline until the point of full return to baseline,
(iv) a step of proceeding to the next step if the peak from the point of initial rise from baseline until the point of full return to baseline consists of a single peak, or repeating step (i) to step (iv) if the fraction corresponding to the point of initial rise from baseline until the point of full return to baseline includes multiple peaks, and
(v) a step of separating and detecting, by chiral column chromatography, each optical isomer in the fractions in which the peak from the point of initial rise from baseline until the point of full return to baseline corresponds to a single peak, to obtain a chromatogram,
wherein when step (i) to step (iv) are repeated, the chromatography is carried out using a column and a mobile phase that are different from the previously used column and mobile phase.

2. The analysis method according to claim 1, wherein the point of initial rise from baseline and the point of full return to baseline is the point at which complete separation takes place between one or more peaks from the point of initial rise from baseline until the point of full return to baseline, and the other peaks.

3. The analysis method according to claim 2, wherein complete separation is assessed based on the standard of a degree of separation of 1.5 or greater.

4. The analysis method according to any one of claims 1 to 3, wherein the chromatography is high-performance liquid chromatography.

5. The analysis method according to any one of claims 1 to 4, wherein the point of initial rise from baseline and the point of full return to baseline is determined for the chromatographic peak previously obtained for a standard sample, and the fraction is obtained for that initial point and full return point.

6. The analysis method according to any one of claims 1 to 5, wherein the column is selected from the group consisting of a reversed-phase column, normal-phase column, cation exchange column, anion exchange column, chiral column and their mixed-mode columns.

7. The analysis method according to any one of claims 1 to 6, wherein the analysis method further includes the following step:
(vi) a step of quantifying each optical isomer of each component from the chromatogram for each optical isomer.

8. The analysis method according to any one of claims 1 to 7, wherein the sample is a biological sample.

9. The analysis method according to any one of claims 1 to 8, wherein the components to be analyzed are a protein-forming amino acid and its optical isomer.

10. A system for analyzing multiple components, comprising one or more chromatography units each comprising a column, a mobile phase introducer and a detector, a chiral chromatography unit comprising a chiral column, a mobile phase introducer and a detector, a flow channel, a flow channel switching unit, one or more reservoirs, and a controller, wherein:
(i) the controller drives the chromatography units so as to separate and detect multiple components in a sample to obtain a chromatogram;
(ii) the controller determines the point of initial rise from baseline and the point of full return to baseline for the chromatographic peaks corresponding to the one or more components in the chromatogram;
(iii) the controller drives the flow channel switching unit so as to successively introduce the fraction corresponding to the point of initial rise from baseline until the point of full return to baseline, into the one or more reservoirs;
(iv) if the peak from the point of initial rise from baseline until the point of full return to baseline consists of a single peak, the process continues to the next step, or if the peak from the point of initial rise from baseline until the point of full return to baseline includes multiple peaks, the controller drives the flow channel switching unit, for introduction from one reservoir to a different chromatography unit than the previously used chromatography unit, and steps (i) to (iv) are repeated;
(v) the controller drives the flow channel switching unit so as to introduce the fraction corresponding to a single peak from the point of initial rise from baseline until the point of full return to baseline, into the chiral chromatography unit; and;
(vi) the controller drives the chiral chromatography unit so as to separate and detect an optical isomer in the fraction in which complete separation of a single component has been achieved, and obtain a chromatogram.

11. The analysis system according to claim 10, wherein the point of initial rise from baseline and the point of full return to baseline is the point at which complete separation takes place between one or more peaks from the point of initial rise from baseline until the point of full return to baseline, and the other peaks.

12. The system according to claim 11, wherein complete separation is assessed based on the standard of a degree of separation of 1.5 or greater.

13. The analysis method according to any one of claims 10 to 12, wherein the point of initial rise from baseline and the point of full return to baseline is determined for the chromatographic peak previously obtained for a standard sample, and the fraction is obtained for that initial point and full return point.

14. The system according to any one of claims 10 to 13, wherein in step (ii), the controller drives the flow channel switching unit to introduce the fraction corresponding to the peak from the point of initial rise from baseline until the point of full return to baseline, to a different chromatography unit in step (iii), instead of into a loop of a multi loop.

15. The system according to any one of claims 10 to 14, wherein the reservoir is a loop.

16. The system according to any one of claims 10 to 15, wherein the chromatography unit different from the previously used chromatography unit has the same column as the column of the previously used chromatography unit, but has a different mobile phase from the mobile phase of the previously used chromatography unit.

17. The system according to any one of claims 10 to 16, wherein the chromatography is high-performance liquid chromatography.

18. The system according to any one of claims 10 to 17, wherein the column is selected from the group consisting of a reversed-phase column, normal-phase column, cation exchange column, anion exchange column, chiral column and their mixed-mode columns.

19. The system according to any one of claims 10 to 18, wherein (viii) the controller quantifies each optical isomer from the chromatogram for each optical isomer.

20. The system according to any one of claims 10 to 19, wherein the sample is a biological sample.

21. The system according to any one of claims 10 to 20, wherein the components to be analyzed are a protein-forming amino acid and its optical isomer.
